# EUROPÄISCHE PATENTSCHRIFT

(11) **EP 3 279 117 B1**
(45) Veröffentlichungstag und Bekanntmachung des Hinweises auf die Patenterteilung: **31.08.2022**
(21) Anmeldenummer: 17183424.5
(22) Anmeldetag: 27.07.2017
(51) Int. Cl.: B65G 17/20, B65G 19/02

(54) **FÖRDERSYSTEM ZUM FÖRDERN VON FÖRDERGÜTERN**
CONVEYOR SYSTEM FOR CONVEYING CONVEYED GOODS
CONVOYEUR DESTINÉ AU TRANSPORT DE PRODUITS

(30) Priorität: 02.08.2016 CH 10032016
(43) Veröffentlichungstag der Anmeldung: 07.02.2018
(73) Patentinhaber: Ferag AG, 8340 Hinwil (CH)
(72) Erfinder: Stauber, Erwin, 8624 Grüt (CH)
(74) Vertreter: Frei Patent Attorneys

(56) Entgegenhaltungen:
- EP-A1- 2 385 002
- EP-A2- 1 123 850
- WO-A1-2008/135088
- CH-A1- 707 798
- DE-A1-102014 226 600
- JP-A- 2002 120 920

## Beschreibung

Die Erfindung liegt auf dem Gebiet der Transport- und Fördertechnik, insbesondere der Intra-Logistik. Die Erfindung betrifft ein schienengeführtes Fördersystem mit einer Förderschiene, sowie mit mindestens einem entlang der Förderschiene geführten Förderwagen, wobei der mindestens eine Förderwagen ein Kontaktelement zur Ausbildung eines Mitnahmekontaktes ausbildet, ferner mit einer Mitnehmerkette mit mindestens einem Mitnehmer zum Mitnehmen des mindestens einen Förderwagens in Förderrichtung, wobei der Mitnehmer eine Aufnahme zum Aufnehmen des Kontaktelementes zwecks Ausbildung des Mitnahmekontaktes ausbildet.

Fördersysteme der oben genannten Art sind aus dem Stand der Technik bekannt. Die Förderwagen solcher Fördersysteme sind insbesondere als Einzelwagen mit Laufrollen oder Gleitelementen ausgebildet, welche unabhängig von den anderen Förderwagen entlang der Förderschiene bewegt werden können. Solche Fördersysteme erlauben die Förderung einzelner Fördergüter mittels Förderwagen entlang individueller Förderwege, welche von Förderwegen anderer Förderwagen unabhängig sind.

Die Förderwege sind durch den Verlauf der Förderschienen vorgegeben, entlang welchen die Förderwagen geführt sind. Die Fördersysteme können zur Ausbildung individueller Förderwege Verzweigungen mit Weichen umfassen.

Derartige Fördersysteme finden insbesondere in der Intra-Logistik Einsatz, wo Fördergüter beispielsweise nach bestimmten Kriterien sortiert oder zu Förderguteinheiten zusammengestellt werden sollen.

Die genannten Fördersysteme bilden in der Regel geschlossene Förderwege aus, entlang welchem die Förderwagen umlaufend bewegt werden. Die Förderwagen lassen sich dabei auf unterschiedliche Weisen antreiben.

So sind beispielsweise Schwerkraftfördersysteme bekannt, welche sich dadurch auszeichnen, dass die Förderwagen zumindest abschnittsweise mittels Schwerkraftunterstützung entlang eines Förderweges gefördert werden. Der Förderweg weist im Bereich der Schwerkraftförderung entsprechend ein Gefälle auf. Die Förderwagen werden entlang solcher Förderabschnitte in der Regel nicht aktiv angetrieben.

Allerdings haben sämtliche Fördersysteme gemeinsam, dass die Förderwagen zumindest entlang eines Förderwegabschnittes aktiv angetrieben werden müssen. Dies trifft auch auf die Schwerkraftfördersysteme zu.

Bei Schwerkraftfördersystemen müssen die Förderwagen beispielsweise mittels eines aktiven Antriebs entlang eines Förderwegabschnittes mit einer Steigung von einem tieferen Niveau auf ein höheres Niveau gefördert, bevor diese dann entlang eines Förderwegabschnittes mit Gefälle mittels Schwerkraft gefördert werden können.

Die genannten Fördersysteme und insbesondere die Schwerkraftfördersysteme sind häufig als Hängefördersysteme zum hängenden Fördern der Fördergüter ausgebildet. Hängefördersysteme zeichnen sich insbesondere dadurch aus, dass die Förderwagen zumindest abschnittsweise unterhalb der Förderschiene geführt werden.

Es sind Fördersysteme mit einer aktiv angetriebenen Mitnehmerkette mit Mitnehmern bekannt, welche mit Kontaktelementen der Förderwagen einen Mitnahmekontakt ausbilden. Die Förderwagen werden über die mit dem Mitnehmer in Mitnahmekontakt stehenden Kontaktelementen zumindest entlang eines Förderwegabschnittes aktiv angetrieben.

Der Mitnahmekontakt zwischen Förderwagen und Mitnehmer wird im sogenannten Einschleusabschnitt ausgebildet, der einem Förderwegabschnitt entspricht, in welchem Mitnehmer und Förderwagen zu Ausbildung eines Mitnahmekontaktes zusammengeführt werden.

Im Stand der Technik gibt es eine Vielzahl von Ausführungsformen, welche sich alleine durch die strukturelle und funktionelle Ausbildung des Mitnahmekontaktes zwischen Förderwagen und Mitnehmer voneinander unterscheiden.

So beschreibt beispielsweise die Publikationsschrift EP 2 385 002 B1 ein Hängefördersystem mit einer Mehrzahl von Förderwagen sowie mit einer Mitnehmerkette. Die Mitnehmerkette enthält Mitnehmer, welche am Kettenkörper der Mitnehmerkette angebracht sind. Die Mitnehmer weisen jeweils eine Aussparung zur Aufnahme eines Kontaktelementes des Förderwagens auf, zwecks Ausbildung eines Mitnahmekontaktes. Ein in Förderrichtung vorlaufender Abschnitt des Mitnehmers bildet eine Rampe aus, welche ein sanftes Überlaufen der Förderwagen durch die Mitnehmer erlaubt. Das Überlaufen der Förderwagen endet mit dem Eingreifen des Kontaktelementes in die Aussparung, wobei der Mitnehmer durch die auf diesen wirkende Schwerkraft nach unten gedrückt und der Mitnahmekontakt hergestellt wird.

Die Ausbildung des Mitnahmekontaktes durch Überlaufen des Förderwagens durch den Mitnehmer ist eine im Stand der Technik häufig anzutreffende technische Ausführung.

Bei dieser Ausführung wird der Umstand ausgenutzt, dass das Eigengewicht des überlaufenden Mitnehmers bzw. der überlaufenden Mitnehmerkette in der Regel ausreicht, um einen Mitnahmekontakt zwischen einem Kontaktelement und einer Aussparung am Mitnehmer herzustellen und aufrecht zu erhalten.

Es gibt allerdings auch Fördersysteme, gemäss welchen die Förderwagen bzw. deren Kontaktelemente seitlich, d.h. quer zur Förderrichtung, an die Mitnehmer herangeführt werden sollen, zum Beispiel weil ein Überlaufen der Förderwagen durch die Mitnehmer nicht in Frage kommt.

Da Mitnehmer und Förderwagen in der Regel nicht taktsynchron zusammengeführt werden, sind die Aufnahmen der Mitnehmer und die Kontaktelemente der Förderwagen im Einschleusabschnitt zur Herstellung des Mitnahmekontaktes nicht aufeinander ausgerichtet. Aufnahme und Kontaktelement greifen beim Zusammenführen von Mitnehmer und Förderwagen folglich nicht ohne weiteres ineinander.

Dies rührt daher, weil die Förderwagen in der Regel einzeln und unabhängig voneinander in unregelmässigen Zeitabständen, d.h. taktunabhängig, im Einschleusabschnitt eintreffen und daher zuerst in den Takt der Mitnehmerkette eingetaktet werden müssen.

Das Eintakten der Förderwagen in den Takt der Förderkette und die damit verbundene Herstellung des Mitnahmekontaktes wird in der Regel erreicht, indem die Förderwagen mit einer anderen Fördergeschwindigkeit in den Einschleusabschnitt gefördert werden als die Mitnehmer der Mitnehmerkette. Auf diese Weise bewegen sich die Kontaktelemente der Förderwagen im Einschleusabschnitt relativ zu den Mitnehmern bis diese auf die entsprechende Aussparung am Mitnehmer treffen und unter Ausbildung eines Mitnahmekontaktes in diese eingreifen.

Allerdings sind entsprechende technische Massnahmen notwendig, welche gewährleisten, dass das Kontaktelement, sobald dieses mit der dazugehörigen Aufnahme des Mitnehmers zusammentrifft, zur Herstellung des Mitnahmekontaktes auch tatsächlich in die Aussparung eingreift und der so ausgebildete Mitnahmekontakt auch erhalten bleibt.

Die Publikationsschrift CH 707 798 A1 beschreibt ein Fördersystem gemäß dem Oberbegriff des Anspruchs 1, d.h. einen schienengeführten Förderwagen mit mehreren Laufrollen zur rollenden Förderung entlang einer Schienenführung. Seitlich am Förderwagen ist vorstehender Kontaktzapfen angeordnet, welcher ausgelegt ist, mit einem an einer Antriebskette befestigten Mitnehmer einen Mitnahmekontakt auszubilden.

Die Publikationsschrift EP 2 385 002 A1 beschreibt Mitnehmer für eine Hängeförderanlage zum Mitnehmen von an einer Führungsbahn der Hängeförderanlage hängenden Waren, mit einem Mitnehmerkörper, der einen Vorlaufabschnitt und einen Nachlaufabschnitt aufweist Der Vorlaufabschnitt ist in Form einer Rampe mit einem Rampenprofil ausgebildet, um ein sanftes Überlaufen von auf der Führungsbahn aufgestauten Waren zu ermöglichen. Der Nachlaufabschnitt ist in Form eines Hakens, um damit eine an der Führungsbahn hängende Ware einzuhaken und sie entlang der Führungsbahn mitzunehmen.

Die Publikationsschrift DE 10 2014 226 600 A1 beschreibt Förderelement für eine Hängewarenförderanlage, welche dazu ausgestaltet ist, an einer Aufhängung auf einer Schiene hängende Hängeware entlang einer Förderrichtung über die Schiene zu bewegen. Das Förderelement umfasst einen ersten Vorsprung, durch den die Aufhängung der Hängeware an einer ersten Anschlagsfläche kontaktierbar und über die Schiene mitnehmbar ist. Ferner umfasst das Förderelement einen zweiten Vorsprung zum Aufnehmen der Hängeware zwischen dem ersten und dem zweiten Vorsprung. Der zweite Vorsprung kann elastisch oder gelenkig ausgebildet sein, so dass der zweite Vorsprung die Hängeware überfahren und damit einfangen kann.

Aufgabe vorliegender Erfindung es deshalb, eine Lösung vorzuschlagen, gemäss welcher die Förderwagen im Einschleusabschnitt unter Ausbildung eines Mitnahmekontaktes seitlich an den Mitnehmer herangeführt und unter Herstellung eines Mitnahmekontaktes in den Takt der Mitnehmerkette eingetaktet werden können. Der Mitnahmekontakt soll ferner bei der nachfolgenden Förderung erhalten bleiben.

Der Mitnahmekontakt soll insbesondere herstellbar sein, ohne dass der gesamte Mitnehmer eine Ausweichbewegung ausführen muss, wie dies beispielsweise bei einem Überlaufen des Mitnehmers, wie oben beschrieben, der Fall ist.

Ferner soll zur Herstellung des Mitnahmekontaktes keine Schwerkraftunterstützung erforderlich sein, wie dies beispielsweise bei Fördersystemen mit überlaufenden Mitnehmern der Fall ist.

Die Aufgabe wird durch die Merkmale des unabhängigen Anspruchs 1 und 14 gelöst.

Die abhängigen Ansprüche, die Beschreibung und die Figuren beinhalten besondere Ausführungsformen und Weiterbildungen der Erfindung.

Der erfindungsgemässe Förderwagen zeichnet sich nun dadurch aus, dass der Mitnehmer ein Auslenkorgan aufweist, welches eine Begrenzung für die Aufnahme ausbildet, wobei das Auslenkorgan durch das Kontaktelement unter Freigabe der Aufnahme quer zur Förderrichtung elastisch, insbesondere feder-elastisch, auslenkbar ist. Quer zur Förderrichtung bedeutet in der vorliegenden Patentanmeldung insbesondere in einer Richtung quer zur Förderrichtung und parallel oder im wesentlichen parallel zu einer horizontalen Ebene.

"Im wesentlichen parallel" bedeutet in dieser Anmeldung, dass die Abweichung des Richtungsverlaufs weniger als 10° (Winkelgrad) beträgt.

Die Auslenkung des Auslenkorgans durch das Kontaktelement wird durch eine Relativbewegung zwischen Kontaktelement und Mitnehmer im Einschleusabschnitt ausgelöst. Die Relativbewegung weist insbesondere eine Bewegungskomponente parallel zur Förderrichtung auf. Die Relativbewegung verläuft insbesondere im Wesentlichen parallel zur Förderrichtung.

Bei diesem Vorgang übt das Kontaktelement auf das Auslenkorgan eine Auslenckraft aus. Diese Auslenkkraft führt zur Auslenkung des Auslenkorgans quer zur Förderrichtung.

Auf das ausgelenkte Auslenkorgan wirkt ferner eine Rückstellkraft, welche der Auslenkkraft entgegen gerichtet ist. Bei Ausbleiben der Auslenkkraft wird das Auslenkorgan durch die Rückstellkraft wieder in seine Ausgangsposition zurückbewegt.

Das Zurückbewegen kann ein Zurückspringen sein, derart dass das Kontaktelement in die Aufnahme einschnappt.

Dies ist z. B. dann der Fall, wenn das Kontaktelement seine Position in der Aufnahme eingenommen hat und der Mitnahmekontakt hergestellt ist.

In der Ausgangsposition bildet das Auslenkorgan eine Begrenzung der Aufnahme aus. Das Kontaktelement wird so gegen ein Herausgleiten aus der Aufnahme parallel zur Förderrichtung gesichert bzw. blockiert.

Das heisst, durch das Zurückbewegen bzw. Zurückspringen des Auslenkorgans wird das Auslenkorgan in der Aufnahme eingefangen.

Der Begriff "Relativbewegung" bedeutet, dass die Förderwagen bzw. das Kontaktelement und die Mitnehmer parallel zur Förderrichtung mit unterschiedlichen Geschwindigkeiten bewegt werden.

In der Regel wird die Mitnehmerkette entlang des Einschleusabschnittes in Förderrichtung bewegt.

Die Förderwagen werden insbesondere ebenfalls mit einer Richtungskomponente in Förderrichtung in den Einschleusabschnitt bewegt. Die Förderwagen werden allerdings insbesondere mit einer geringeren Geschwindigkeit in den Einschleusabschnitt bewegt als die Mitnehmer, so dass die Mitnehmer mit ihren Auslenkorganen jeweils auf die Kontaktelemente der Förderwagen auflaufen.

Die Förderwagen können allerdings auch mit einer Richtungskomponente entgegen der Förderrichtung in den Einschleusabschnitt bewegt werden, so dass die Förderwagen mit ihren Kontaktelementen auf die diesen entgegen kommenden Auslenkorgane der Mitnehmer auflaufen.

Die Förderwagen werden im Einschleusabschnitt insbesondere mit einer seitlichen Richtungskomponente an die Mitnehmer herangeführt. "Seitlich" bedeutet insbesondere quer zur Förderrichtung.

Die Aufnahme ist bei Ausbildung des Mitnahmekontaktes insbesondere seitlich vom Förderwagen bzw. von dessen Kontaktelement angeordnet.

Das durch das Kontaktelement ausgelenkte Auslenkorgan gibt dabei die Aufnahme insbesondere in einer Einschleusrichtung frei, welche im wesentlichen parallel zur Förderrichtung verläuft. Die Einschleusrichtung entspricht jener Richtung, in welcher sich das Kontaktelement relativ zum Mitnehmer in die Aufnahme bewegt.

Erfindungsgemäß bildet das Auslenkorgan eine Gleitfläche für das Kontaktelement aus.

Das Kontaktelement gleitet entlang dieser Gleitfläche unter Auslenkung des Auslenkorgans quer zur Förderrichtung in die Aufnahme.

Die Gleitfläche ist insbesondere so ausgebildet, dass das Kontaktelement in einer parallel zur Förderrichtung verlaufenden Relativbewegung zwischen Kontaktelement und Mitnehmer entlang der Gleitfläche und im Anschluss an die Gleitfläche in die Aufnahme gleitet.

Die Gleitfläche ist insbesondere eine Aufgleitfläche.

Das heisst, die Gleitfläche ist insbesondere so ausgelegt, dass das Kontaktelement in einer im wesentlichen parallel zur Förderrichtung verlaufenden Relativbewegung zwischen Kontaktelement und Mitnehmer unter zunehmender Auslenkung des Auslenkorganes entlang der Gleitfläche in Richtung Aufnahme auf das Auslenkorgan aufgleitet.

Die Aufgleitfläche ist insbesondere Teil eines rampenförmigen Aufgleitkörpers am Auslenkorgan, auf welchen das Kontaktelement aufgleitet, und welcher die zunehmende Auslenkung des Auslenkorgans auslöst.

Die Gleitfläche, insbesondere des Aufgleitkörpers, kann bogenförmig oder eben ausgebildet sein.

Gemäss einer Weiterbildung der Erfindung ist die Gleitfläche in Förderrichtung betrachtet gegenüber dem dieser zugeordneten Kontaktelement und quer zur Förderrichtung zunehmend zurückversetzt. Auf diese Weise wird ein rampenförmiger Aufgleitkörper mit einer entgegen der Förderrichtung ansteigenden Aufgleitfläche ausgebildet.

Das Auslenkorgan bildet insbesondere einen an einen Grundkörper des Mitnehmers anschliessenden, elastischen Auslenkabschnitt aus. Der Auslenkabschnitt ist insbesondere integraler Bestandteil des Mitnehmers.

Der Auslenkabschnitt kann aus einem Kunststoff sein. Das Auslenkorgan kann z. B. in einem Spritzgiessverfahren aus Kunststoff hergestellt werden.

Der Auslenkabschnitt kann allerdings auch aus einem Metall, wie Federstahl, sein. Der Auslenkabschnitt kann ferner auch aus einem Verbundwerkstoff sein.

Eine einteilige Fertigung des Mitnehmers erlaubt eine Reduktion der Bauteile und vereinfacht und vergünstigt so die Herstellung der Mitnehmerkette bzw. des Mitnehmers.

Der Auslenkabschnitt kann z. B. laschenförmig ausgebildet sein.

An einem freien Ende des Auslenkorgans kann ein Führungskörper angeordnet sein, welcher die Gleitfläche ausbildet.

Der Führungskörper kann den oben beschriebenen, rampenförmigen Aufgleitkörper ausbilden bzw. diesem entsprechen.

Der Führungskörper bildet insbesondere eine Begrenzung, wie räumliche Begrenzung, für die Aufnahme aus.

Der Führungskörper schliesst insbesondere an den Auslenkabschnitt, wie elastischer Auslenkabschnitt, an.

Der Führungskörper ist insbesondere über den Auslenkabschnitt mit dem Grundkörper des Mitnehmers verbunden.

Der Führungskörper und der Auslenkabschnitt sind zusammen mit dem Grundkörper insbesondere integraler Bestandteil des Mitnehmers.

Die elastische Auslenkbarkeit des Auslenkorgans kann auch durch ein separates Federelement, wie Schraubenfeder, erreicht werden, welches zwischen dem Führungskörper und dem Grundkörper des Mitnehmers angeordnet ist. Das Federelement, welches somit Teil des Auslenkabschnittes ist, verbindet den Führungskörper mit dem Grundkörper des Mitnehmers.

Die Aufnahme ist insbesondere als Aussparung ausgebildet. Die Aufnahme ist insbesondere schlitzförmig.

Die Aufnahme wird insbesondere durch eine erste und zweite Begrenzung ausgebildet. Die Aufnahme kann ausschliesslich durch die beiden Begrenzungen ausgebildet sein.

Die beiden Begrenzungen bilden in Förderrichtung betrachtet eine vordere und eine hintere Begrenzung aus.

Die beiden Begrenzungen liegen einander insbesondere gegenüber und sind voneinander beabstandet.

Die beiden Begrenzungen werden insbesondere durch den Mitnehmer ausgebildet.

Die erste Begrenzung, welches insbesondere die vordere Begrenzung ist, wird wie oben bereits erwähnt durch das Auslenkorgan ausgebildet.

Gemäss einer Weiterbildung der Erfindung wird die zweite Begrenzung durch einen freien Endabschnitt eines Begrenzungsarms des Mitnehmers ausgebildet. Der Begrenzungsarm ist insbesondere integraler Teil des Mitnehmers.

Der Begrenzungsarm kann elastische Eigenschaften aufweisen, welche erlauben, dass das Kontaktelement bei einer Blockierung des Förderwagens ohne Beschädigung der Bauteile aus der mit der Mitnehmerkette weiterbewegten Aufnahme entweichen kann. Hierzu wird der Begrenzungsarm durch das Kontaktelement elastisch ausgelenkt.

Die beiden Begrenzungen zeichnen sich jeweils insbesondere durch eine Begrenzungsfläche aus, welche die Aufnahme eingrenzen bzw. einschliessen.

Gemäss einer Weiterbildung der Erfindung ist die Aufnahme quer zur Förderrichtung offen.

Dies erlaubt das seitliche Hinausbewegen des Kontaktelementes aus der Aufnahme.

Gemäss einer Weiterbildung der Erfindung ist die Aufnahme gegen unten offen. Dies erlaubt das Hinausbewegen des Kontaktelementes aus der Aufnahme nach unten.

Das Kontaktelement ist insbesondere ein vorstehender Körper wie Zapfen, Stift, Nocken oder Nase. Das Kontaktelement steht insbesondere seitlich, d.h. quer zur Förderrichtung dem Grundkörper des Förderwagens vor.

Die Mitnehmer sind insbesondere als separate Bauteile am Kettenkörper befestigt, insbesondere lösbar befestigt. Die Mitnehmer sind insbesondere begrenzt drehbar am Kettenkörper befestigt.

Gemäss einer Weiterbildung der Erfindung sind die Mitnehmer jeweils um eine quer zur Förderrichtung ausgerichteten Drehachse am Kettenkörper der Mitnehmerkette drehbar, insbesondere begrenzt drehbar, gelagert.

Die Mitnehmer sind jeweils insbesondere um einen Achskörper mit einer quer zur Förderrichtung ausgerichtete Drehachse am Kettenkörper befestigt.

Gemäss einer Weiterbildung der Erfindung bildet der Mitnehmer einen gabelförmigen Aufnahmeabschnitt aus.

Die Mitnehmer umgreifen jeweils mit ihren gabelförmigen Aufnahmeabschnitten insbesondere den Achskörper eines nachlaufenden, baugleichen Mitnehmers.

Die Mitnehmerkette bzw. der dazugehörige Kettenkörper ist insbesondere entlang einer Führungsschiene geführt. Der Kettenkörper ist insbesondere in einem Führungskanal der Führungsschiene geführt.

Der Kettenkörper kann Führungsrollen aufweisen, mittels welchen dieser entlang des Führungsprofils, insbesondere in dessen Führungskanal, rollend geführt ist.

Zum Antreiben der Förderwagen wird der Kettenkörper über einen entsprechenden Antrieb aktiv angetrieben. So kann der Kettenkörper beispielsweis über ein Antriebsrad mit Zahnung angetrieben werden.

Das Fördersystem enthält insbesondere eine Mehrzahl von unabhängig voneinander bewegbaren Förderwagen.

Der mindestens eine Förderwagen umfasst insbesondere mindestens eine Laufrolle, über welche der Förderwagen entlang der Förderschiene rollend bewegbar bzw. abrollbar ist.

Der Förderwagen kann insbesondere mehrere Laufrollen enthalten, welche derart am Förderwagen angeordnet sind, dass der Förderwagen entlang der Förderschiene starr geführt ist.

"starr geführt" heisst insbesondere dass der Förderwagen relativ zur Förderschiene nicht kippbar ist.

Der Förderwagen enthält ferner insbesondere ein Halteorgan zum Halten eines Fördergutes.

Das Halteorgan kann ein Haken, eine Halte-Öse, ein Magnet, ein Stift oder ein Greifer bzw. eine Klammer sein.

Das Fördersystem ist insbesondere als Hängefördersystem ausgebildet. Ein solches Hängefördersystem wurde bereits eingangs erörtert. Die Fördergüter werden hier vorwiegend hängend gefördert.

Das Fördersystem ist insbesondere als Schwerkraftfördersystem ausgebildet. Ein solches Schwerkraftfördersystem wurde bereits eingangs erörtert. Die Fördergüter werden hier über wenigstens einen Förderwegabschnitt mittels Schwerkraftunterstützung entlang eines Gefälles gefördert.

Das Fördersystem ist insbesondere ein Schwerkraftfördersystem zur hängenden Förderung von Fördergütern.

Dank dem erfindungsgemässen Fördersystem können die Förderwagen unter Ausbildung eines Mitnahmekontaktes mit der Mitnehmerkette seitlich zugeführt werden. Die Kontaktelemente lassen sich dank dem Auslenkorgan sanft in die Aufnahmen hinein bewegen. Entsprechend erfolgt der Einschleusvorgang gleichmässig und ruhig.

Im Folgenden wird der Erfindungsgegenstand anhand eines Ausführungsbeispiels, welches in den beiliegenden Figuren dargestellt ist, näher erläutert. Es zeigen jeweils schematisch:
- Figur 1: eine perspektivische Ansicht eines Ausschnittes eines erfindungsgemässen Fördersystems;
- Figur 2: eine Seitenansicht des Fördersystems gemäss Figur 1;

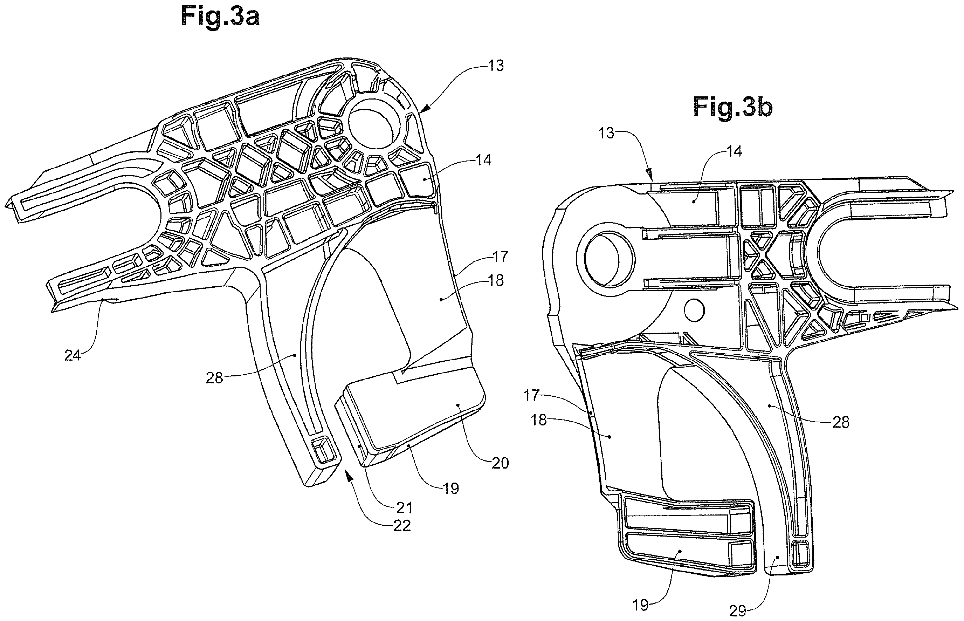

- Figur 3a, 3b: perspektivische Ansichten eines Mitnehmers;
- Figur 4: eine Querschnittansicht des Fördersystems gemäss Figur 1 bis 3;
- Figur 5: eine perspektivische Ansicht eines weiteren Ausschnittes eines erfindungsgemässen Fördersystem gemäss Figur 1 bis 4.

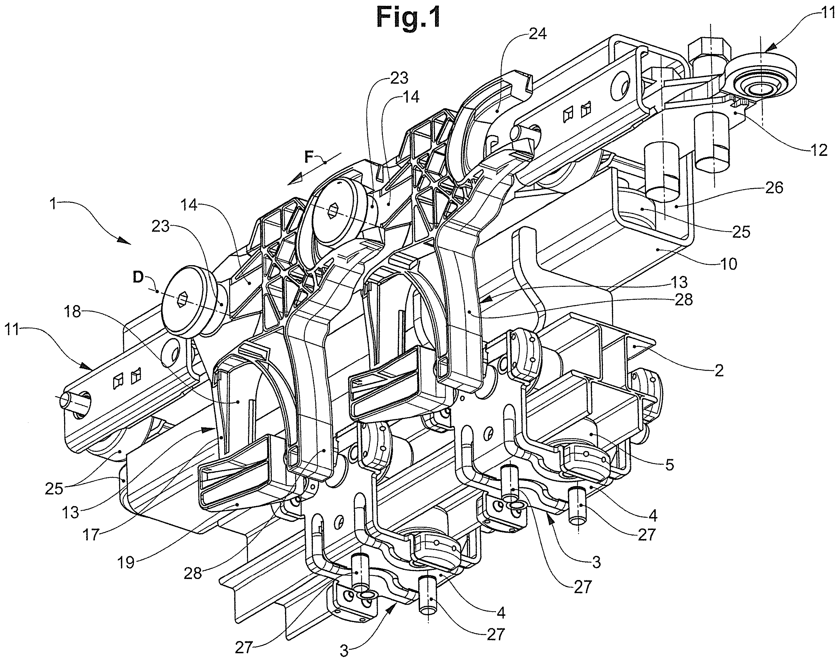

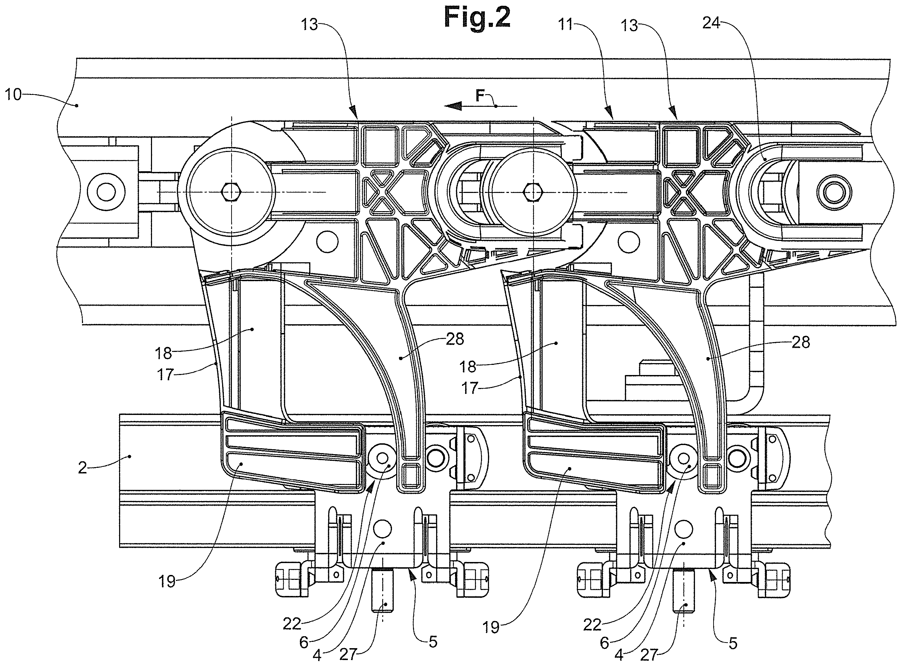

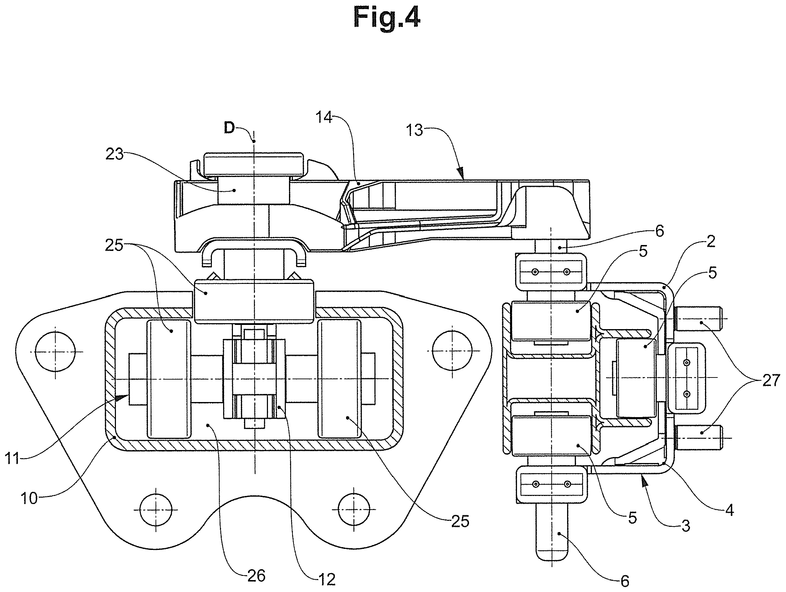

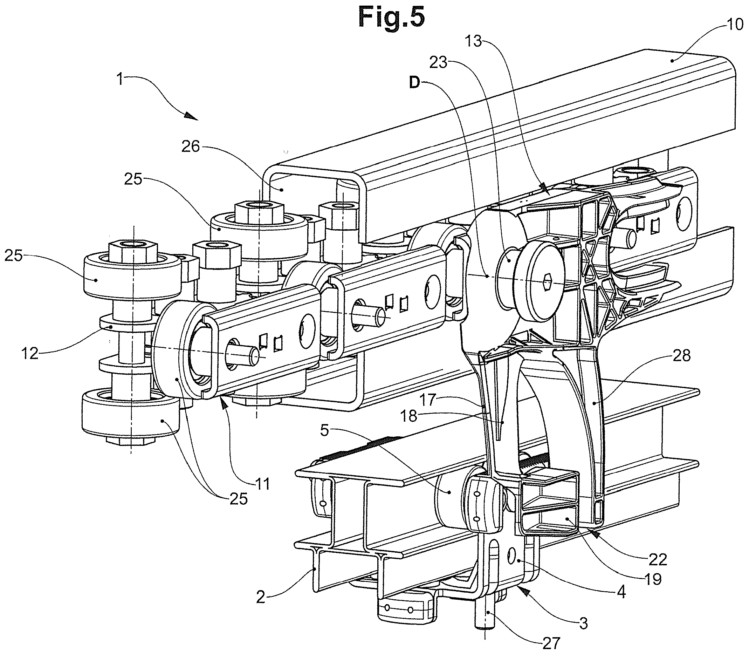

Die Figuren 1, 2, 4 und 5 zeigen ein erfindungsgemässes Fördersystem 1 mit einer Mehrzahl von entlang einer Förderschiene 2 in Förderrichtung F rollend geführten Förderwagen 3. Das Fördersystem 1 ist als Hängefördersystem ausgebildet, gemäss welchem die Förderwagen 3 zur hängenden Förderung von Fördergütern unterhalb der Förderschiene 2 angeordnet sind.

Die Förderwagen 3 enthalten jeweils einen Grundkörper 4, an welchem mehrere Laufrollen 5 drehbar befestigt sind. Diese gewährleisten eine stabile jedoch gewissermassen auch starre Führung der Förderwagen 3 entlang der Förderschiene 2. "Starre Führung" bedeutet, dass die Förderwagen 3 entlang der Förderrichtung F relativ zur Förderschiene 2 weder nach vorne noch zurück und auch nicht zur Seite kippen können.

Die Förderwagen 3 enthalten jeweils vom Grundkörper 4 seitlich abstehende Kontaktzapfen 6 zur Herstellung eines Mitnahmekontaktes mit einem Mitnehmer 13 einer Mitnehmerkette 11.

Ferner enthält der Förderwagen Verbindungsstifte 27 zum Anbringen eines Halteorgans (nicht gezeigt) an den Förderwagen 3. Da das Fördersystem 1 als Hängeförderer ausgebildet ist, ist der Verbindungsstift 27 in der Förderstellung nach unten gerichtet.

Das Fördersystem 1 enthält im Weiteren eine Mitnehmerkette 11 mit einer Mehrzahl von an einem Kettenkörper 12 angeordneten Mitnehmern 13 zur Ausbildung eines Mitnahmekontaktes mit den Kontaktzapfen 6 am Förderwagen 3.

Die Mitnehmer 13 sind mittels Spritzgiessen hergestellte Kunststoffteile, welche über einen Achskörper 23 begrenzt drehbar am Kettenkörper 12 befestigt sind.

Der Kettenkörper 12, welcher hohen Zugkräften ausgesetzt ist, besteht aus Metall.

Am Kettenkörper 12 sind Führungsrollen 25 zur rollenden Führung der Mitnehmerkette 11 entlang einer nachfolgend beschriebenen Führungsschiene 10 angeordnet.

Das Fördersystem 1 enthält im Weiteren eine Führungsschiene 10, welche einen Führungskanal 26 zur Aufnahme des Kettenkörpers 12 der Mitnehmerkette 11 ausbildet. Der Kettenkörper 12 ist im Führungskanal 26 über die Führungsrollen 25 rollend geführt.

Die Mitnehmer 13 bilden jeweils ein Auslenkorgan 17 sowie einen Begrenzungsarm 28 aus.

Das Auslenkorgan 17 bildet an seinem freien Endabschnitten eine erste Begrenzungsfläche 21 aus. Der Begrenzungsarm 28 bildet an seinem freien Endabschnitt eine zweite Begrenzungsfläche 29 aus. Die beiden Begrenzungsflächen 21, 29 liegen einander gegenüber und schliessen eine Aufnahme 22 ein.

Das Auslenkorgan 17 enthält einen elastischen Auslenkabschnitt 18 sowie einen an den elastischen Auslenkabschnitt 18 anschliessenden Führungskörper 19, welcher auch die erste Begrenzungsfläche 21 des Auslenkorgans 17 ausbildet. Der Führungskörper 19 ist entsprechend im freien Endabschnitt des Auslenkorgans 17 angeordnet und ist über den Auslenkabschnitt 18 mit dem Grundkörper 14 des Mitnehmers 13 verbunden.

Zur Herstellung des oben beschriebenen Mitnahmekontaktes zwischen Förderwagen 3 bzw. Kontaktzapfen 6 und Mitnehmer 13 wird der Förderwagen 3 mit einer parallel zur Förderrichtung F sowie mit einer quer zur Förderrichtung F und zum Mitnehmer 13 hin gerichteten Bewegungskomponente an den Mitnehmer 13 heran geführt.

Das Heranführen des Förderwagens 3 an den Mitnehmer 13 erfolgt insbesondere über eine Einschleusvorrichtung (nicht gezeigt), z. B. in Ausführung einer Weiche.

Der Führungskörper 19 bildet nun eine Gleitfläche 20 aus, welche in Richtung Aufnahme 22 zur Förderschiene 2 bzw. zum Förderwagen 3 hin rampenförmig ansteigt. Der rampenförmige Anstieg der Gleitfläche 20 verläuft überdies in Förderrichtung F.

Der rampenförmige Anstieg der Gleitfläche 20 ist dergestalt, dass der Kontaktzapfen 6 des einzuschleusenden Förderwagens 3 auf die Gleitfläche 20 aufläuft und entlang der rampenartigen Gleitfläche 20 unter Auslenkung des Auslenkorgans 17 auf der Gleitfläche 20 aufgleitet. Der auf die rampenartigen Gleitfläche 20 aufgleitende Kontaktzapfen 6 drückt dabei den Führungskörper 19 zunehmend quer zur Förderrichtung F vom Förderwagen 3 weg.

Bei diesem Vorgang wird auch die Begrenzungsfläche 21 quer zur Förderrichtung von der Aufnahme 22 weg ausgelenkt, wodurch die Aufnahme 22 für das Hineingleiten des Kontaktzapfens 6 freigegeben wird. Der Kontaktzapfen 6 gleitet nun über die Gleitfläche 20 in die freigegebene Aufnahme 22 hinein.

Das Wegdrücken des Führungskörpers 19 erfolgt aufgrund der starren Führung des Förderwagens 3 entlang der Förderschiene 2, welche bei einer seitlichen Krafteinwirkung keine Ausweichbewegung des Förderwagens 3 bzw. dessen Kontaktzapfen 6 erlaubt. Entsprechend wird das Auslenkorgan 17 durch den Kontaktzapfen 6 zur Seite gedrückt.

Beim Hineingleiten des Kontaktzapfens 6 von der Gleitfläche 20 in die Aufnahme 22 fällt die vom Kontaktzapfen 6 auf das Auslenkorgan 17 ausgeübte Auslenkkraft weg. In der Folge bewegt sich das Auslenkorgan 17 aufgrund der wirkenden Rückstellkraft wieder in seine Ausgangsposition zurück.

Da der Wegfall der Auslenkkraft sprunghaft erfolgt, bewegt sich auch das Auslenkorgan 17 ruckartig in seine Ausgangsposition zurück. Dies bewirkt, dass der Kontaktzapfen 6 quasi in die Aufnahme 22 einschnappt.

Bei diesem Vorgang wird die Aufnahme 22 durch das sich zurück bewegende Auslenkorgan 12 und entsprechend durch die sich ebenfalls zurückbewegende erste Begrenzungsfläche 21 zur Einführseite des Kontaktzapfens 6 hin wieder versperrt, so dass der Kontaktzapfen 6 zur Einführseite hin nicht mehr aus der Aufnahme 22 entweichen kann.

Im Anschluss an die Ausbildung des Mitnahmekontaktes werden die Förderwagen 3 und die Mitnehmerkette 11 bzw. die Mitnehmer 13 gleichlaufend in Förderrichtung F bewegt. Bei diesem Vorgang nimmt die angetriebene Mitnehmerkette 11 die Förderwagen 3 entlang des Förderweges 3 mit. Die Übertragung der Mitnahmekraft zwischen Mitnehmerkette 11 und Förderwagen 3 erfolgt dabei vom Begrenzungsarm 28 auf den Kontaktzapfen 6.

## Patentansprüche

1. Fördersystem (1) enthaltend:
- eine Förderschiene (2);
- mindestens einen entlang der Förderschiene (2) geführten Förderwagen (3), wobei der mindestens eine Förderwagen (3) ein Kontaktelement (6) zur Ausbildung eines Mitnahmekontaktes ausbildet;
- eine Mitnehmerkette (11) mit mindestens einem Mitnehmer (13) zum Mitnehmen des mindestens einen Förderwagens (3) in eine Förderrichtung (F), wobei der Mitnehmer (13) eine Aufnahme (22) zur Aufnahme des Kontaktelementes (6) zwecks Ausbildung des Mitnahmekontakt ausbildet,
**dadurch gekennzeichnet, dass**
der Mitnehmer (13) ein Auslenkorgan (17) aufweist, welches eine räumliche Begrenzung für die Aufnahme (22) ausbildet, und das Auslenkorgan (17) durch das Kontaktelement (6) unter Freigabe der Aufnahme (22) quer zur Förderrichtung (F) elastisch auslenkbar ist, wobei das Auslenkorgan (17) eine Gleitfläche (20) für das Kontaktelement (6) ausbildet, über welche das Kontaktelement (6) unter Auslenkung des Auslenkorganes (17) in die Aufnahme (22) gleiten kann.

2. Fördersystem nach Anspruch 1, **dadurch gekennzeichnet, dass** die Gleitfläche (20) als Aufgleitfläche ausgebildet ist.

3. Fördersystem nach Anspruch 1 oder 2, **dadurch gekennzeichnet, dass** die Gleitfläche so ausgelegt ist, dass das Kontaktelement (6) in einer parallel zur Förderrichtung (F) verlaufenden Relativbewegung zwischen Kontaktelement (6) und Mitnehmerkette (11) bei zunehmender Auslenkung des Auslenkorganes (17) auf der Gleitfläche (20) in Richtung Aufnahme (22) gleiten kann.

4. Fördersystem nach einem der Ansprüche 1 bis 3,
**dadurch gekennzeichnet, dass**
die Gleitfläche (20) in Förderrichtung (F) betrachtet gegenüber dem dieser zugeordneten Kontaktelement quer zur Förderrichtung (F) zunehmend zurückversetzt ist.

5. Fördersystem nach einem der Ansprüche 1 bis 4,
**dadurch gekennzeichnet, dass**
das Auslenkorgan (17) einen, an einen Grundkörper (14) des Mitnehmers (13) anschliessenden, elastischen Auslenkabschnitt (18) ausbildet.

6. Fördersystem nach einem der Ansprüche 1 bis 5,
**dadurch gekennzeichnet, dass**
an einem freien Ende des Auslenkorganes (17) ein Führungskörper (19) angeordnet ist, welcher die Gleitfläche (20) ausbildet.

7. Fördersystem nach Anspruch 6,
**dadurch gekennzeichnet, dass** der Führungskörper (19) eine räumliche Begrenzung für die Aufnahme (22) ausbildet, und der Führungskörper (19) an den elastischen Auslenkabschnitt (18) anschliesst.

8. Fördersystem nach einem der Ansprüche 1 bis 7,
**dadurch gekennzeichnet, dass**
das Kontaktelement (6) und das Auslenkorgan (17) so ausgebildet sind, dass das Kontaktelement (6) in einer parallel zur Förderrichtung (F) verlaufenden Relativbewegung zwischen Kontaktelement (6) und Mitnehmerkette (11) im Anschluss an die Gleitfläche in die Aufnahme (22) gleitet.

9. Fördersystem nach Anspruch 8,
**dadurch gekennzeichnet, dass** das Auslenkorgan (17) so ausgebildet und am Mitnehmer angeordnet ist, dass das elastisch ausgelenkte Auslenkorgan (17) nachdem das Kontaktelement (6) in die Aufnahme geglitten ist, wieder seine Ausgangsposition einnimmt und so das Kontaktelement (6) gegen ein Herausgleiten aus der Aufnahme (22) in oder entgegen der Förderrichtung (F) sichert.

10. Fördersystem nach einem der Ansprüche 1 bis 9,
**dadurch gekennzeichnet,**
**dass** die Aufnahme (22) durch eine in Förderrichtung (F) betrachtet vordere Begrenzung (21) und eine hintere Begrenzung (16) räumlich begrenzt wird, wobei eine der Begrenzungen (21) durch das Auslenkorgan (17) ausgebildet wird.

11. Fördersystem nach einem der Ansprüche 1 bis 10,
**dadurch gekennzeichnet,**
**dass** die Aufnahme (22) bei Ausbildung eines Mitnahmekontaktes seitlich vom Förderwagen (3) angeordnet ist.

12. Fördersystem nach einem der Ansprüche 1 bis 11,
**dadurch gekennzeichnet,**
**dass** der Mitnehmer (13) um eine quer zur Förderrichtung (F) ausgerichtete Drehachse (D) an einem Kettenkörper (12) der Mitnehmerkette (11) drehbar gelagert ist.

13. Fördersystem nach einem der Ansprüche 1 bis 12,
**dadurch gekennzeichnet,**
**dass** der mindestens eine Förderwagen (3) mindestens eine Laufrolle (5) enthält, über welche der Förderwagen (3) entlang der Förderschiene (2) abrollbar ist, und der Förderwagen (3) ein Halteorgan zum Halten eines Fördergutes enthält.

14. Verfahren zur Herstellung eines Mitnahmekontaktes zwischen einem Förderwagen (3) und einem Mitnehmer (13) einer Mitnehmerkette (11) mittels eines Fördersystems (1) nach einem der Ansprüche 1 bis 13, mit folgenden Schritten:
- Bewegen des Förderwagens (3) in den Einschleusabschnitt und
- seitliches Heranführen des Kontaktelementes (6) des Förderwagens (3) an die Mitnehmehrkette (11);
- Aufgleiten des Kontaktelementes (6) auf die Gleitfläche (20) des Auslenkorgans (17) und
- Auslenken des Auslenkorgans (17) quer zur Förderrichtung (F) unter Freigabe der Aufnahme (22);
- Hineinbewegen des Kontaktelementes (6) in die freigegebene Aufnahme (22) im Anschluss an die Gleitfläche (20);
- Zurückbewegen des Auslenkorgans (17) in seine Ausgangsposition und Sichern des Kontaktelementes (6) in der Aufnahme (22).

## Claims

1. A conveying system (1) comprising:
- a conveying rail (2);
- at least one conveying vehicle (3) which is led along the conveying rail (2), wherein the at least one conveying vehicle (3) forms a contact element (6) for forming a driving contact,
- a driver chain (11) with at least one driver (13) for driving the at least one conveying vehicle (3) in a conveying direction (F), wherein the driver (13) forms a receiver (22) for receiving the contact element (6) for the purpose of forming a driving contact,
**characterised in that**
the driver (13) comprises a deflecting member (17) which forms a spatial limitation for the receiver (22), and the deflecting member (17) is elastically deflectable transversely to the conveying direction (F) by the contact element (6) whilst opening up the receiver (22), wherein the deflecting member (17) forms a sliding surface (20) for the contact element (6), via which the contact element (6) can slide into the receiver (22) amid the deflection of the deflecting member (17).

2. A conveying system according to claim 1, **characterised in that** the sliding surface (20) is designed as a sliding-on surface.

3. A conveying system according to claim 1 or 2, **characterised in that** the sliding surface is designed such that the contact element (6) in a relative movement which is between the contact element (6) and the driver chain (11) and which runs parallel to the conveying direction (F) can slide on the sliding surface (20) in the direction of the receiver (22) amid an increasing deflection of the deflecting member (17).

4. A conveying system according to one of the claims 1 to 3, **characterised in that** considered in the conveying direction (F), the sliding surface (20) is increasingly set back transversely to the conveying direction (F) with respect to the contact element which is assigned to this surface.

5. A conveying system according to one of the claims 1 to 4, **characterised in that** the deflecting member (17) forms an elastic deflecting section (18) which connects onto a base body (14) of the driver (13).

6. A conveying system according to one of the claims 1 to 5, **characterised in that** a guide body (19) which forms the sliding surface (20) is formed at a free end of the deflecting member (17).

7. A conveying system according to claim 6, **characterised in that** the guide body (19) forms a spatial delimitation for the receiver (22) and that the guide body (19) connects onto the elastic deflecting section (18).

8. A conveying system according to one of the claims 1 to 7, **characterised in that** the contact element (6) and the deflecting member (17) are designed such that subsequently to the sliding surface, the contact element (6) slides into the receiver (22) in a relative movement between the contact element (6) and the driver chain (11), said relative movement running parallel to the conveying direction (F).

9. A conveying system according to claim 8, **characterised in that** the design of the deflecting member (17) and its arrangement on the driver is such that after the contact element (6) has slid into the receiver, the elastically deflected deflecting member (17) reassumes its initial position and thus secures the contact element (6) against sliding out of the receiver (22) in or counter to the conveying direction (F).

10. A conveying system according to one of the claims 1 to 9, **characterised in that** the receiver (22) is spatially delimited by a limitation (21) which is at the front considered in the conveying direction (F) and by a rear limitation (22), wherein one of the limitations (21) is formed by the deflecting member (17).

11. A conveying system according to one of the claims 1 to 10, **characterised in that** the receiver (22) is arranged laterally of the conveying vehicle (3) on forming a driving contact.

12. A conveying system according to one of the claims 1 to 11, **characterised in that** the driver (13) is rotatably mounted on a chain body (12) of the driver chain (11) about a rotation axis (D) which is aligned transversely to the conveying direction (F).

13. A conveying system according to one of the claims 1 to 12, **characterised in that** the at least one conveying vehicle (3) comprises at least one runner roller (5), via which the conveying vehicle (3) can roll along the conveying rail (2) and the conveying vehicle (3) comprises a holding member for holding a conveyed object.

14. A method for creating a driving contact between a conveying vehicle (3) and a driver (13) of a driver chain (11) by way of a conveying system (1) according to one of the claims 1 to 13, with the following steps:
- moving the conveying vehicle (3) into the merging section and
- laterally leading the contact element (6) of the conveying vehicle (3) onto the driver chain (11);
- sliding the contact element (6) onto the sliding surface (20) of the deflecting member (17) and
- deflecting the deflecting member (17) transversely to the conveying direction (F) amid the opening up of the receiver (22);
- moving the contact element (6) into the opened up receiver (22) subsequently to the sliding surface (20);
- moving the deflecting member (17) back into its initial position and securing the contact element (6) in the receiver (22).

## Revendications

1. Système de transport (1) comprenant:
- un rail de transport (2);
- au moins un chariot de transport (3) guidé le long du rail de transport (2), le au moins un chariot de transport (3) formant un élément de contact (6) pour réaliser un contact d'entraînement;
- une chaîne d'entraînement (11) avec au moins un entraîneur (13) pour entraîner le au moins un chariot de transport (3) dans une direction de transport (F), l'entraîneur (13) formant un logement (22) pour recevoir l'élément de contact (6) afin de former le contact d'entraînement,
**caractérisé en ce que**
l'entraîneur (13) présente un organe de déviation (17) qui forme une délimitation spatiale pour le logement (22), et l'organe de déviation (17) peut être dévié élastiquement transversalement à la direction de transport (F) par l'élément de contact (6) en libérant le logement (22), l'organe de déviation (17) formant une surface de glissement (20) pour l'élément de contact (6), sur laquelle l'élément de contact (6) peut glisser dans le logement (22) en déviant l'organe de déviation (17).

2. Système de transport selon la revendication 1, **caractérisé en ce que** la surface de glissement (20) est conçue comme une surface de glissement en soulevant.

3. Système de transport selon la revendication 1 ou 2, **caractérisé en ce que** la surface de glissement est conçue de telle sorte que l'élément de contact (6) peut glisser sur la surface de glissement (20) en direction du logement (22) lors d'un mouvement relatif entre l'élément de contact (6) et la chaîne d'entraînement (11) s'étendant parallèlement à la direction de convoyage (F) lorsque l'organe de déviation (17) se déplace de manière croissante.

4. Système de transport selon l'une des revendications 1 à 3, **caractérisé en ce que** la surface de glissement (20), vue dans la direction de convoyage (F), est de plus en plus en retrait par rapport à l'élément de contact qui lui est associé, transversalement à la direction de convoyage (F).

5. Système de transport selon l'une des revendications 1 à 4, **caractérisé en ce que** l'organe de déviation (17) forme une section de déviation élastique (18) se raccordant à un corps de base (14) de l'entraîneur (13).

6. Système de transport selon l'une des revendications 1 à 5, **caractérisé en ce qu'**à une extrémité libre de l'organe de déviation (17) est disposé un corps de guidage (19) qui forme la surface de glissement (20).

7. Système de transport selon la revendication 6, **caractérisé en ce que** le corps de guidage (19) forme une limite spatiale pour le logement (22), et le corps de guidage (19) se raccorde à la section de déviation élastique (18).

8. Système de transport selon l'une des revendications 1 à 7, **caractérisé en ce que** l'élément de contact (6) et l'organe de déviation (17) sont configurés de telle sorte que l'élément de contact (6) glisse dans le logement (22) dans un mouvement relatif s'étendant parallèlement à la direction de convoyage (F) entre l'élément de contact (6) et la chaîne d'entraînement (11) à la suite de la surface de glissement.

9. Système de transport selon la revendication 8, **caractérisé en ce que** l'organe de déviation (17) est conçu et disposé sur l'entraîneur de telle sorte que l'organe de déviation (17) dévié élastiquement reprend sa position initiale après que l'élément de contact (6) a glissé dans le logement et empêche ainsi l'élément de contact (6) de glisser hors du logement (22) dans la direction de transport (F) ou dans la direction opposée.

10. Système de transport selon l'une des revendications 1 à 9, **caractérisé en ce que** le logement (22) est délimité spatialement par une limite avant (21) et une limite arrière (16), vues dans la direction de convoyage (F), l'une des limites (21) étant formée par l'organe de déviation (17).

11. Système de transport selon l'une des revendications 1 à 10, **caractérisé en ce que** le logement (22) est disposé latéralement par rapport au chariot de transport (3) lorsqu'un contact d'entraînement est formé.

12. Système de transport selon l'une des revendications 1 à 11, **caractérisé en ce que** l'entraîneur (13) est monté rotatif sur un corps de chaîne (12) de la chaîne d'entraînement (11) autour d'un axe de rotation (D) orienté transversalement à la direction de convoyage (F).

13. Système de transport selon l'une des revendications 1 à 12, **caractérisé en ce que** le au moins un chariot de transport (3) comprend au moins un galet de roulement (5) par lequel le chariot de transport (3) peut rouler le long du rail de transport (2), et le chariot de transport (3) comprend un organe de maintien pour maintenir un produit à transporter.

14. Procédé pour établir un contact d'entraînement entre un chariot de transport (3) et un entraîneur (13) d'une chaîne d'entraînement (11) au moyen d'un système de transport (1) selon l'une des revendications 1 à 13, comprenant les étapes suivantes:
- déplacement du chariot de transport (3) dans la section d'insertion et
- approcher latéralement l'élément de contact (6) du chariot de transport (3) de la chaîne d'entraînement (11);
- glissement de l'élément de contact (6) sur la surface de glissement (20) de l'organe de déviation (17) et
- déviation de l'organe de déviation (17) transversalement à la direction de transport (F) avec libération du logement (22);
- déplacement de l'élément de contact (6) dans le logement (22) libéré à la suite de la surface de glissement (20);
- retour de l'organe de déviation (17) dans sa position initiale et blocage de l'élément de contact (6) dans le logement (22).
